# EUROPEAN PATENT SPECIFICATION

(11) **EP 1 370 078 B1**
(45) Date of publication and mention of the grant of the patent: **02.07.2008**
(21) Application number: 03011646.1
(22) Date of filing: 22.05.2003
(51) Int. Cl.: H04N 5/445, G08G 1/0969

(54) **Navigation apparatus**
Navigationsgerät
Appareil de navigation

(30) Priority: 29.05.2002 JP 2002155958
(43) Date of publication of application: 10.12.2003
(73) Proprietor: Pioneer Corporation, Meguro-ku, Tokyo (JP)
(72) Inventor: Takatori, Yuji, c/o Pioneer Corp. Kawagoe Works, Kawagoe-shi, Saitama (JP); Hara, Yoichi, c/o Pioneer Corp. Kawagoe Works, Kawagoe-shi, Saitama (JP)
(74) Representative: Manitz, Finsterwald & Partner GbR

(56) References cited:
- WO-A-01/72036
- US-A1- 2002 008 780
- US-A1- 2002 025 083
- PATENT ABSTRACTS OF JAPAN vol. 1999, no. 03, 31 March 1999 (1999-03-31) & JP 10 339643 A (PIONEER ELECTRON CORP), 22 December 1998 (1998-12-22)

## Description

### BACKGROUND OF THE INVENTION

### 1. Field of the Invention

The present invention relates to a navigation apparatus for displaying a plurality of video images from different information sources on a monitor screen.

### 2. Description of the Related Art

When a video image from, for example, a TV tuner or a VCR (Video Cassette Recorder) is displayed on a monitor screen of a navigation apparatus, the so-called On-Screen Display (hereinafter, referred to as "OSD") function is utilized. The OSD function is a function, for example, to display a video image which is superposing a picture representing a TV channel number or a bar code indicating a magnitude of the volume on the displayed video image.

In the prior art, such an OSD function has been controlled by a monitor display part. However, the monitor display part can offer only a limited OSD function. The prior art OSD function can only display a TV channel number or a barcode indicating volume control at most. When, for example, a DVD player is used as a source of a video image, and a so-called icon of a rotating disk is displayed on a screen as the OSD, a high performance monitor display part is required, resulting in an increased cost. If furthermore, such a monitor display part is used, there is a disadvantage that it is not easy to modify contents and upgrade the OSD function in the monitor display part.

JP 10 339643 A discloses a navigation equipment which displays both a map image and a non-map image on a screen. The problem discussed there is the display of the individual images in the right aspect ratio.

WO 01 72036 A describes an apparatus for simultaneously recording and displaying two video programs with the hardware of a single video decoder system. The apparatus comprises a main channel processing circuit/logic, a second channel processing circuit/logic and common circuitry/ logic.

US 2002/008780 A1 discloses an apparatus and a method for converting multi-source input images. It includes an outside interface part, a format converting part, a memory part, a switching part, a multiplexer and a display processor. Thus, various images can be properly converted to have desired formats and sizes.

US 2002/025083 A1 relates to an image processing apparatus to conduct an OSD function, which is characterized in that the bus band of the image memory in said apparatus is reduced compared to the state of the art.

### SUMMARY OF THE INVENTION

The present invention is provided to solve such a problem as described above. It is an object of the present invention to provide a navigation apparatus provided with a high performance and a high quality OSD function.
According to the present invention, there is provided a navigation apparatus according to claim 1.

### BRIEF DESCRIPTION OF THE DRAWINGS

Fig. 1 is a block diagram showing a navigation apparatus which is one embodiment of the invention.
Fig. 2 is a flow chart illustrating a series of operations performed in a monitor unit shown in Fig. 1.
Fig.3 is a flow chart illustrating a series of operations performed in a navigation unit shown in Fig. 1.
Fig.4 is a state transition diagram showing changes of a frequency of a synchronization signal in the navigation apparatus shown in Fig. 1.

### DETAILED DESCRIPTION OF THE INVENTION

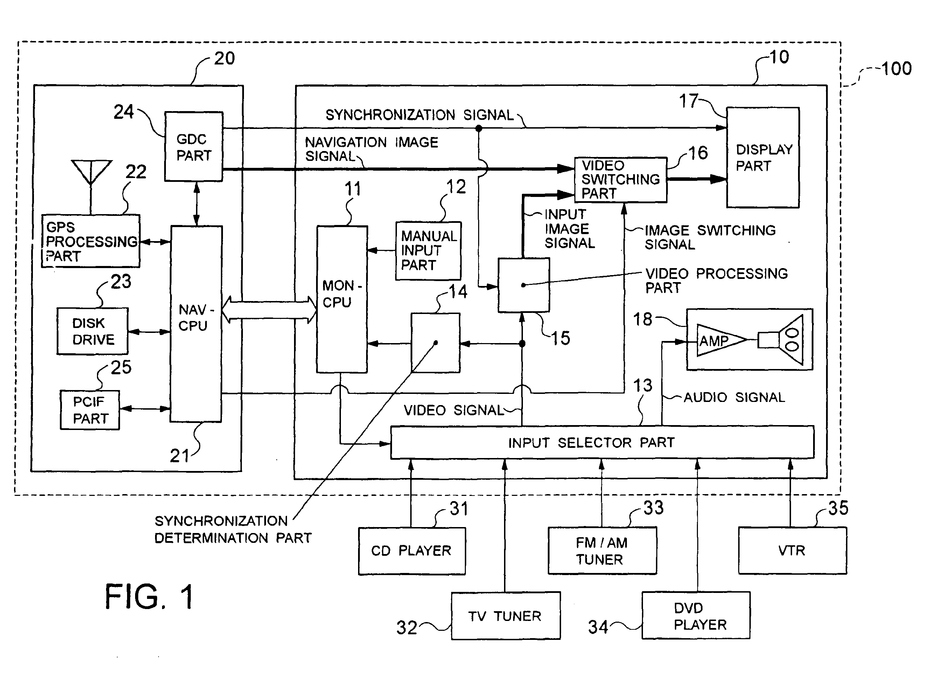

Fig. 1 shows a navigation apparatus (hereinafter, referred to as "the apparatus") which is one embodiment of the present invention.

The apparatus 100 is mounted in a mobile body such as an automobile, a ship, and a motorcycle or carried by an individual. The apparatus 100 comprises a navigation unit 20 and a monitor unit 10.

The configuration of the navigation unit 20 will be described with reference to Fig. 1.

A navigation unit CPU 21 comprises a microprocessor, a memory module including, for example, a RAM and a ROM, and peripheral circuitry for controlling the entire operation of the navigation unit 20. The memory module stores a main program, which governs the overall operation of the navigation unit 20 and some subroutine programs. The microprocessor has a clock and executes the programs in synchronization with a clock signal to perform operations of the navigation unit 20.

The navigation unit CPU 21 is connected with a CPU within the monitor unit 10, which will be described later, to transmit various data and signals between the CPUs. The navigation unit CPU 21 outputs a video switching signal (which will be described in detail later) for the monitor unit 10.

A GPS (Global Positioning System) processing part 22 comprises a GPS receiver and a GPS calculation circuit. The GPS processing part 22 calculates the current position based on the location detection radio waves received from a plurality of GPS satellites, and provides the navigation unit CPU 21 with this calculated position information.

A disk driver 23 is a driving part for dividing a memory disk, such as a DVD and a hard disk, in which geographical information and non-geographical pixel information are stored. A PCIF part 25 is a circuit to interface with a PC card in which various information is stored. A medium in which the geographical information, non-map pixel information, and the like are stored is not limited to examples shown in Fig. 1 but includes other memory modules such as a fixed IC memory.

A graphic display controller 24 (hereinafter, referred to as "GDC part 24") is a circuit for generating a video image on the basis of data provided by the navigation unit CPU 21. This video image will be displayed on a monitor screen of the monitor unit 10. The GDC part 24 supplies a navigation video signal and its synchronization signal to the monitor unit 10. The navigation video signal is an RGB component signal representing a mark showing a geographical position of a moving body which mark is superposed on a map image.

The GDC part 24 can generate a very high-quality video image in order to generate a map image for the navigation operation. In this embodiment, the GDC part 24 performs the OSD function on the monitor screen of the monitor unit 10. Thus , the high-quality and enriched OSD function is achieved on the monitor screen.

Now, a configuration of the monitor unit 10 will be described hereinbelow.

A monitor unit CPU 11 comprises a microprocessor, a memory module including, for example, a RAM and a ROM, and peripheral circuitry. The monitor unit CPU 11 is a circuit for controlling the entire monitor unit 10. The memory module stores programs to govern the operation of the monitor unit 10. The microprocessor executes the programs to perform the operation in the monitor unit 10. As described above, the monitor unit CPU 11 is connected with the navigation CPU 21 to transmit various data and signals between both of the CPUs.

An manual input part 12 comprises input and numeric keypads and the like. The manual input part 12 is a console panel of the apparatus 100. The monitor unit CPU 11 receives a key input (command instruction) from the manual input part 12 at predetermined timings, and performs operations complying with the key input. A user operates the keys on the manual input part 12, and controls this device. Such control covers a selection of a source for the input and an adjustment of settings (e.g., voice volume adjustment).

An input selector 13 is a circuit for selecting one of input sources such as a VTR and a DVD player and incorporating signals from the selected input source into the apparatus 100 under the control of the monitor unit CPU 11. Fig. 1 shows a CD player 31, a TV tuner 32, an FM/AM tuner 33, a DVD player 34, and a VTR 35 as the input sources. However, the input sources according to the embodiment are not limited to those components. In the configuration shown in Fig. 1, the input sources are provided outside the apparatus 100. The device can be configured so that one or more input sources are incorporated within the apparatus 100.

A synchronization determination part 14 is a circuit for determining a synchronization manner or type in respect to a video signal provided from the input source via the input selector 13, and transmitting the result of the determination to the monitor unit CPU 11.

A video processing part 15 is a circuit for performing a process to display the video signal from the input source, which is supplied from the input selector part 13, on the monitor screen of the monitor unit 10. The video processing part 15 converts the video signal from the input source into an RGB component signal, which is stored in a video RAM. Then, the video processing part 15 outputs the RBG component signal to the video switching part 16 in synchronization with a synchronization signal from the navigation unit 20.

The video switching part 16 is a switching circuit for switching between a navigation video signal, such as a geographical video signal and an OSD output signal which are output from the GDC part 24 of the navigation unit 20, and an input video signal which is output from the video processing part 15. The video switching part 16 outputs the selected signal to a display part 17 including the monitor display part. This switching is performed based on the video switching signal provided from the navigation CPU 21.

The display part 17 displays a video signal output from the video switching part 16 on the monitor screen. The display part 17 comprises an LCD panel for displaying a video image, a backlight for illuminating the LCD panel, and a driver circuit for driving the LCD panel. The display part 17 is not limited to such a configuration, but may be a configuration using an image displaying component, such as an electroluminescent display panel, a plasma display panel, and a CRT.

An audio output part 18 is a circuit for converting an audio signal (electrical signal), received from the input source via the input selector part 13, into a sound signal to be output. The audio output part 18 comprises audio equipment such as an amplifier and a speaker. Although not illustrated in Fig. 1, the audio output part 18 may output audio guidance with respect to navigation information supplied thereto from the navigation unit 20.

The operation of the embodiment apparatus 100 shown in Fig. 1 will be described with respect to the monitor unit 10 and the navigation unit 20, separately.

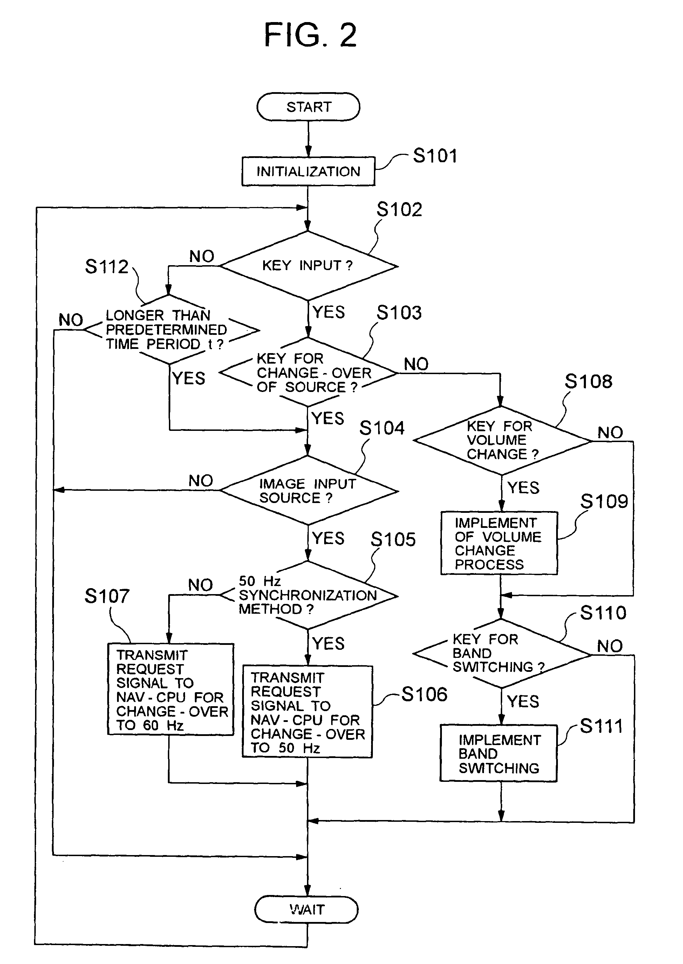

First, the operation of the monitor unit 10 will be described with reference to the flow chart shown in Fig.2.

When power is turned on, or a reset switch is pressed, the monitor unit CPU 11 of the monitor unit 10 starts the subroutine program shown in the flow chart of Fig.2.

The monitor unit CPU 11 executes initialization at step S101 of the subroutine, and then moves to the process of step S102.

At the step S102, the monitor unit CPU 11 determines if any new key input has been provided which reading conditions of various keys of the manual input part 12. Then, if any key input is not newly implemented, the monitor unit CPU 11 moves to step S112.

The monitor unit CPU 11 counts a time period t, which is an elapsed time from the last request for a switching of the synchronization, and determines whether the time period t is longer than a predetermined time or not. The time period t may be counted by a timer (not shown). If the time period t is longer than the predetermined time period, the monitor CPU 11 moves to step S104. If the time period t is shorter than the predetermined time period, the monitor unit CPU 11 moves to the waiting step shown in Fig.2 without performing any process and then returns to the main program (not shown). Then, the monitor unit CPU 11 returns to the step S102 again at the predetermined timing.

If there is any new key input at the step S102, the monitor unit CPU 11 moves to the process of step S103, and determines whether the key input is a command for switching an input source or not.

If the result of the determination at the step S103 is affirmative, the monitor unit CPU 11 moves to step S104, where the monitor unit CPU 11 determines whether the input source selected by the key input is a video input source such as a VTR or a TV tuner.

When the result of the determination at the step S104 indicates that the input source indicated by the key input is a non-video source such as a CD player or an FM tuner, the monitor unit CPU 11 moves to the waiting step described above without executing any process. On the other had, if the input source is determined to be a video input source, the monitor unit CPU 11 moves to the process of step S105. Then, the monitor unit CPU 11 accesses the synchronization determination part 14 and reads the result of the determination of the synchronization type of the video signal which is supplied via the input selector part 13 at this instance.

With respect to the synchronization method or type of a video signal, there are several synchronization methods including NTSC (National Television System Committee) system and PAL (Phase Alternation by Line)system. To simplify a circuit configuration, the apparatus 100 uses a difference between repeated frequencies of respective vertical synchronizing signals in those synchronization methods as a parameter for identifying one synchronization method from other synchronization methods. For example, the repetition frequency of the NTSC system is 60 Hz, and that of the PAL system is 50 Hz. However, other parameters may be used as an identification parameter for determining a synchronization method.

If the input source is, for example, a DVD player, which outputs a digital video signal, the control signal area of the video signal includes an identifier of the recording/reproducing method for a recorded image. Thus, the synchronization determination part 14 may extract such an identifier to determine the recording/reproducing method of an input video signal, i.e., the synchronization method.

If the monitor unit CPU 11 reads the result of the determination of the synchronization method at the step S105 and determines that the frequency of the synchronization signal of the current input video signal is 50 Hz, i.e., the PAL method, it moves to step S106. The monitor unit CPU 11 outputs a request signal to the navigation CPU 21 to make the frequency of the image synchronization signal provided from the GDC part 24 of the navigation unit 20 to the monitor unit 10 to be 50 Hz. Then, the monitor unit CPU 11 moves to the waiting step, and turns to the step S102 to detect a new input.

If, on the other hand, it is determined at the step S105, that the frequency of the synchronization signal of the current input video signal is 60 Hz (i.e., the NTSC method), the monitor unit CPU 11 moves to the step S107.

At the step S107, the monitor unit CPU 11 outputs a request signal to the navigation CPU 21 to make the frequency of the image synchronization signal provided from the GDC part 24 of the navigation unit 20 to the monitor unit 10 be 60 Hz. Then, the monitor unit CPU 11 moves to the waiting step, and returns to the step S102.

On the other hand, in the previous step S103, if it is determined that the key input from the manual input part 12 is not a command to switch the input source, the monitor unit CPU 11 moves to the step S108.

After the step S108 the monitor unit CPU 11 determines the command of the key input from the manual input part 12, and performs an operation corresponding to the command. As shown in the flow chart of Fig. 2, if the key input commands, to change the volume of the apparatus 100, the monitor unit CPU 11 performs an operation for changing the sound volume for an audio output, or adjusting a brightness level for a monitor screen (steps S108 and S109). If the apparatus 100 includes a tuner, and the key input commands a switch to a receiving band, the monitor unit CPU 11 performs the switching operation of the receiving band in the tuner (steps S110 and S111). The flow chart following the step S108 shown in Fig.2 represents only one example. It should be appreciated that various steps may be included in accordance with the actual configuration of the apparatus 100.

After the monitor unit CPU 11 completes the steps S108 to S111, it moves to the waiting step to return to step S102.

The information such as a status of a key input, and a type of a selected input source is transmitted to the navigation CPU 21 from the monitor unit CPU 11 at a predetermined timing. The navigation CPU 21 controls the GDC part 24 according to the information, and generates video images which are required for the OSD function with respect to the monitor screen of the monitor unit 10.

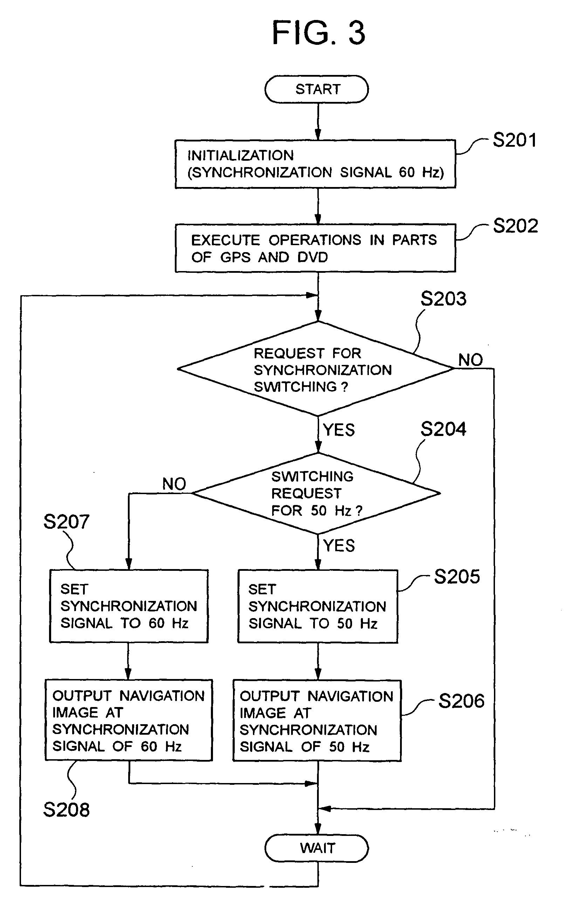

Now, the operation of the navigation unit 20 will be described by referring to the flow chart shown in Fig.3.

When the source power is turned on, or a reset switch is pressed, the navigation unit CPU 21 of the navigation unit 20 starts the subroutine program shown in the flow chart in Fig.3.

At step S201 of the flow chart, the navigation CPU 21 executes a predetermined initialization. In the initialization process, the navigation CPU 21 sets the frequency of the synchronization signal provided for the monitor unit 10 from the GDC part 24 to 60 Hz, i.e., the frequency of the synchronization signal in the NTSC method. The initial value of the frequency of the synchronization signal is not limited to the above frequency, but may be 50 Hz of the PAL method or another value.

Then, the navigation CPU 21 moves to step S202 to perform processes for respective portions of the navigation unit 20. These processes include a GPS location confirmation operation in the GPS processing part 22, an operation for driving a driving circuit in the disk driver 23 and the PCIF part 25 and an access operation. In the flow chart shown in Fig.3, these processes are all performed at step S202 for the sake of simplicity of explanation. However, every time the navigation CPU 21 completes one process, the navigation CPU 21 may return to the main program (not shown), and then perform other operations at a predetermined timing.

At the step S203 the navigation CPU 21 determines whether the monitor unit CPU 11 is requesting a change-over of the frequency of the video synchronization signal. Such request for change-over is generated at the step S106 or S107 in the flow chart (Fig. 2) representing the processes of the monitor unit CPU 11.

If it is determined that there is no request for the change-over of the frequency of the synchronization signal at the step S203, the navigation CPU 21 moves to the waiting step and returns to the main program and returns to the step S203.

If it is determined that a request for the change-over exists at the step S203, the navigation CPU 21 moves to step S204, and determines whether the request for change-over of the frequency of the synchronization signal from the monitor unit CPU 11 is for 50 Hz or not. If the request for the change-over is for 50 Hz, the navigation CPU 21 moves to step S205, where the frequency of the synchronization signal provided for the monitor unit 20 from the GDC part 24 is set to 50 Hz, i.e., a frequency of the synchronization signal in the PAL method. The GDC part 24 outputs a navigation video signal in synchronization with the frequency (step S206). Then, the navigation CPU 21 returns to step S203.

If it is determined at the step S204 that the request for the change-over from the monitor unit CPU 11 is not for 50 Hz, i.e., a request for 60 Hz, the navigation CPU 21 moves to step S207. Then, the navigation CPU 21 sets the frequency of the synchronization signal to 60 Hz, i.e., the frequency of the synchronization signal in the NTSC method. The GDC part 24 outputs the navigation image signal in synchronization with this frequency (step S208). Then, the navigation CPU 21 returns to the step S203.

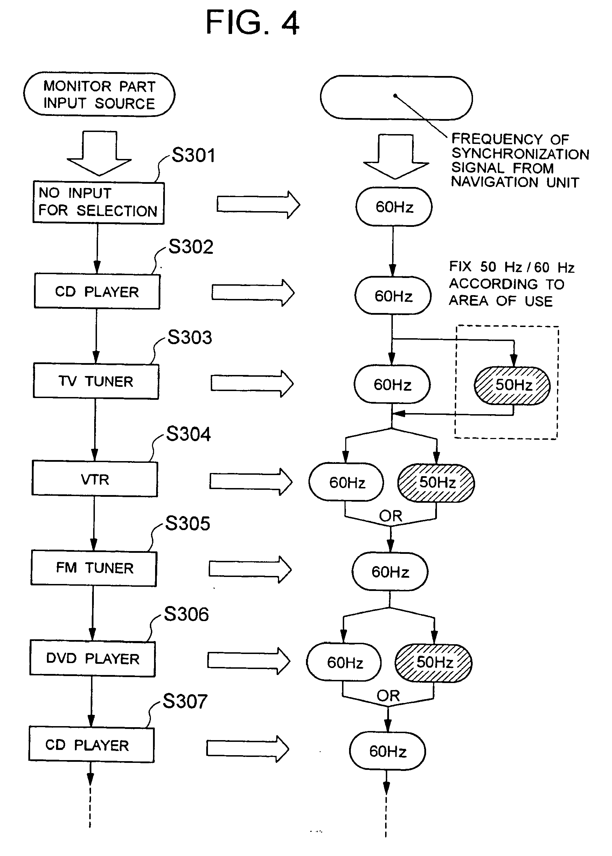

The change-over operation of the frequency of the synchronization signal described above will be concretely described with reference to the diagram shown in Fig.4.

Step S301 in Fig.4 shows the status in which no input source is selected by the selector 13 of the monitor unit 10. In this case, the monitor unit CPU 11 does not request the change-over of the frequency of the synchronization signal for the navigation CPU 21. Thus, the frequency of the synchronization signal supplied from the navigation unit 20 to the monitor unit 10 is maintained at the value of 60 Hz, which is an initial value of the frequency.

In the next step S302, it is assumed that a CD player is selected as an input source of the monitor unit 10. In the case of the CD player, as described above, the monitor unit CPU 11 requests the navigation CPU 21 to switch the frequency of the synchronization signal to 60 Hz. Thus, in Fig. 4, the frequency of the synchronization signal supplied to the monitor unit 10 from the navigation unit 20 is maintained at 60 Hz.

With the following step S303, it is assumed that a TV tuner is selected as an input source of the monitor unit 10. With respect to a TV broadcast, the synchronization method differs among countries; for example, the NTSC method has been adopted in Japan, while the PAL method has been adopted in Germany. Accordingly, in the case of a TV tuner, the frequency of the synchronization signal varies depending on the place of use of the apparatus 100. If the apparatus 100 is produced under a specification to be used in the broadcasting area which has adopted the NTSC method, the monitor unit CPU 11 requests the navigation CPU 21 to switch the frequency of the synchronization signal to 60 Hz. If the apparatus 100 is produced under a specification to be used in the broadcasting area adopted the PAL method, the monitor unit CPU 11 requests a change to the frequency of the synchronization signal to 50 Hz.

In the next step S304, if the input source of the monitor unit 10 is switched to a VTR, the value of the frequency of the synchronization signal output from the navigation unit 20 will be either 50 Hz or 60 Hz in accordance with a video signal from the VTR. The monitor unit CPU 11 determines the synchronization method of the video signal input from the VTR, and sends a switching request of the synchronization signal according to the result of the determination. Then, the navigation unit 20 outputs the frequency of the synchronization signal of the synchronization method in accordance with the request (50 Hz or 60 Hz).

At the step S305, it is assumed that the input source of the monitor unit 10 is switched to an FM tuner. In this case, since the input source does not include a video signal, the frequency of the synchronization signal is fixed to the initial value of 60 Hz as in the case of the CD player.

Then, at the step S306, when the input source of the monitor unit 10 is switched to a DVD player, the navigation unit 20 outputs the frequency of the synchronization signal (50 Hz or 60 Hz) corresponding to the synchronization method of video software which is played back on the DVD player, as in the case of the VTR.

In this embodiment, video images are displayed on the monitor screen of the display part 17 of the monitor unit 10 in synchronization with the synchronization signal provided from the navigation unit 20.

Furthermore, in this embodiment, when video images relating to navigation are displayed on the monitor screen, the input of the video switching part 16 of the monitor unit 10 is switched to the navigation video signal in response to the video switching signal supplied from the navigation CPU 21.

When an input image signal from each input source is displayed on the monitor screen, first, an input image signal selected by the input selector 13 is applied to the synchronization determination part 14 and the image processing part 15. Then, the result of the determination of the synchronization for the input image signal is transmitted to the navigation CPU 21 via the monitor unit CPU 11. The navigation CPU 21 controls the GDC part 24 based on the result. The signaling method and the frequency value of the synchronization signal of the navigation image signal is made to be coincident with the input image signal. At the same time, the navigation CPU 21 outputs the image switching signal to the image switching part of the monitor unit 10 to select the image signal.

The image signal applied to the image processing part 15 is converted into the RGB data signals to be displayed on the monitor screen by the image processing part 15. After being converted, the input image signal is stored in the video RAM, and then controlled so as to synchronize with the synchronization signal provided from the GDC part 24. After completing those processes, the input image signal is output on the monitor screen via the image switching part 16.

If the OSD process by which the navigation image signal is superposed on the input image signal on the screen is executed, the navigation CPU 21 outputs the image switching signal to the image switching part 16 at a predetermined timing to perform the OSD process.

As described above, since the GDC part 24 of the navigation unit 20, having a sophisticated picture display function, carries out the OSD process, a high-quality OSD process can be performed. Furthermore, the OSD function is easily upgraded by upgrading the software of the navigation unit.

In this embodiment, even if the synchronization method of the input display signal is switched due to switching of the input source, the OSC process is stably performed, since the synchronization method and the frequency of the synchronization signal of the navigation image are also correpondingly switched.

In the embodiment shown in Fig. 1, in the monitor unit, the selector part for an input source and the synchronization determination part are provided in the monitor unit. However, those portions may be provided within the navigation unit. In the above description, the OSD is used to superpose the navigation image signal over the input image signal on the monitor screen. However, a video image extracted from the navigation image signal and a video image extracted from the input image signal may be separately displayed on the screen as a multiple-image screen.

In the above embodiment, synchronization timing between the navigation image signal and the input image signal is matched by switching the vertical synchronization signal between the frequencies of 50Hz and 60 Hz. However, the frequencies are not limited to those values.

The NTSC method and the PAL method are used as input image signal methods. However, the present invention is not limited to the above methods. A video image input by, for example, the MPEG method can be adopted. In this case, synchronization timings suited for respective methods are used.

In the above embodiment, coincidence of the synchronization timing does not only mean making the synchronization timing perfectly coincident, but also includes being slightly out of alignment with in a practically negligible range.

It is understood that the foregoing description and accompanying drawings set forth the preferred embodiments of the invention at the present time.

## Claims

1. A navigation apparatus which comprises a position detection part (22) for detecting a current position of a mobile body, a navigation image signal generating part (21, 24) for extracting geographical information corresponding to said current position from a geographical information source and generating a navigation image signal including a map image based on said geographical information and showing thereon a mark representing said current position, a video information source (13, 32, 34, 35) being different from said geographical information source and producing a non-navigation image signal, a display drive part for driving a display part (17) in response to an image signal supplied thereto so as to cause said display part to display an image corresponding to the supplied image signal, and a video switching part (16) for selectively relaying either one of said navigation image signal and non-navigation image signal to said display drive part as said image signal in response to input instructions,
**characterized by**
a synchronization determination part (14) which determines a synchronization method of said non-navigation signal, and
said navigation image generating part (21, 24) being adapted to generate an OSD signal to be relayed to said display drive part in response to said input instructions, while causing the frame synchronizing timings of said non-navigation image signal and said navigation image signal to coincide to each other in accordance with the determined synchronization method, when the navigation image signal and the non-navigation image signal are displayed concurrently.

2. The navigation apparatus according to claim 1, **characterized in that** said OSD signal represents at least one of video image and still picture.

3. The navigation apparatus according to claim 1, **characterized in that** said synchronization determination part (14) determines a frame synchronization timing in accordance with a synchronization frequency included in said non-navigation signal.

4. The navigation apparatus according to claim 1, **characterized in that** said synchronization determination part (14) detects a frame synchronization identifier included in said non-navigation signal and determines a frame synchronization timing.

5. The navigation apparatus according to claim 1, wherein said synchronization determination part (14) sets a frame synchronization timing to a predetermined value in accordance with an attribute of said non-navigation signal.

## Patentansprüche

1. Navigationsvorrichtung, umfassend einen Positionsdetektionsteil (22) zum Detektieren einer momentanen Position eines mobilen Körpers, einen Navigationsabbildungssignal-Erzeugungsteil (21, 24) zum Extrahieren einer geografischen Information, die der momentanen Position entspricht, von einer Quelle geografischer Informationen und Erzeugen eines Navigationsabbildungssignals einschließlich einer Kartenabbildung auf der Grundlage der geografischen Information und Zeigen einer Markierung daran, die die momentane Position darstellt, eine Videoinformationsquelle (13, 32, 34, 35), die sich von der Quelle geografischer Informationen unterscheidet und ein Nichtnavigationsabbildungssignal erzeugt, einen Anzeigentreiberteil zum Treiben eines Anzeigeteils (17) in Ansprechen auf ein diesem geliefertes Abbildungssignal, um zu bewirken, dass der Anzeigeteil eine Abbildung anzeigt, die dem gelieferten Abbildungssignal entspricht, und einen Videoumschalteteil (16) zum selektiven Weiterleiten von entweder dem Navigationsabbildungssignal oder dem Nichtnavigationsabbildungssignal an den Anzeigentreiberteil als das Abbildungssignal in Ansprechen auf Eingabeanweisungen,
**gekennzeichnet durch**
einen Synchronisationsermittlungsteil (14), der ein Synchronisationsverfahren des Nichtnavigationssignals ermittelt, und
wobei der Navigationsabbildungs-Erzeugungsteil (21, 24) geeignet ist, um ein OSD-Signal zu erzeugen, das in Ansprechen auf die Eingabeanweisungen an den Anzeigentreiberteil weitergeleitet werden soll, während bewirkt wird, dass die Frame-Synchronisations-Timings des Nichtnavigationsabbildungssignals und des Navigationsabbildungssignals gemäß dem ermittelten Synchronisationsverfahren übereinstimmen, wenn das Navigationsabbildungssignal und das Nichtnavigationsabbildungssignal gleichzeitig angezeigt werden.

2. Navigationsvorrichtung nach Anspruch 1, **dadurch gekennzeichnet, dass** das OSD-Signal eine Videoabbildung und/oder ein Festbild darstellt.

3. Navigationsvorrichtung nach Anspruch 1, **dadurch gekennzeichnet, dass** der Synchronisationsermittlungsteil (14) ein Frame-Synchronisations-Timing gemäß einer Synchronisationsfrequenz ermittelt, die in dem Nichtnavigationssignal umfasst ist.

4. Navigationsvorrichtung nach Anspruch 1, **dadurch gekennzeichnet, dass** der Synchronisationsermittlungsteil (14) einen Frame-Synchronisationsidentifikator detektiert, der in dem Nichtnavigationssignal umfasst ist, und ein Frame-Synchronisations-Timing ermittelt.

5. Navigationsvorrichtung nach Anspruch 1, wobei der Synchronisationsermittlungsteil (14) ein Frame-Synchronisations-Timing gemäß einem Attribut des Nichtnavigationssignals auf einen vorbestimmten Wert setzt.

## Revendications

1. Appareil de navigation qui comprend une partie de détection de position (22) pour détecter la position courante d'un corps mobile, une partie génératrice de signal d'image de navigation (21, 24) pour extraire des informations géographiques correspondant à ladite position courante d'une source d'informations géographiques et générer un signal d'image de navigation comprenant l'image d'une carte basée sur lesdites informations géographiques et indiquant sur celle-ci un symbole représentant ladite position courante, une source d'informations vidéo (13, 32, 34, 35) qui est différente de ladite source d'informations géographiques et produisant un signal d'image de non-navigation, une partie de pilotage d'affichage destinée à piloter une partie d'affichage (17) en réponse à un signal d'image qui lui est délivré de façon à faire en sorte que ladite partie d'affichage affiche une image correspondant au signal d'image délivré, et une partie de commutation vidéo (16) pour relayer sélectivement l'un ou l'autre dudit signal d'image de navigation et dudit signal d'image de non-navigation vers ladite partie de pilotage d'affichage en tant que ledit signal d'image en réponse à des instructions d'entrée, **caractérisé par**
une partie de détermination de synchronisation (14) qui détermine un procédé de synchronisation dudit signal de non-navigation, et ladite partie génératrice d'image de navigation (21, 24) étant conçue pour générer un signal OSD ("On Screen Display" pour Affichage à l'Écran) devant être relayé à ladite partie de pilotage d'affichage en réponse auxdites instructions d'entrée, tout en faisant en sorte que les instants de synchronisation de trame dudit signal d'image de non-navigation et dudit signal d'image de navigation coïncident l'un avec l'autre en fonction du procédé de synchronisation déterminé, lorsque le signal d'image de navigation et le signal d'image de non-navigation sont affichés simultanément.

2. Appareil de navigation selon la revendication 1, **caractérisé en ce que** ledit signal OSD représente au moins l'une d'une image vidéo et d'une image fixe.

3. Appareil de navigation selon la revendication 1, **caractérisé en ce que** ladite partie de détermination de synchronisation (14) détermine un instant de synchronisation de trame en conformité avec une fréquence de synchronisation contenue dans ledit signal de non-navigation.

4. Appareil de navigation selon la revendication 1, **caractérisé en ce que** ladite partie de détermination de synchronisation (14) détecte un identificateur de synchronisation de trame contenu dans ledit signal de non-navigation et détermine un instant de synchronisation de trame.

5. Appareil de navigation selon la revendication 1, dans lequel ladite partie de détermination de synchronisation (14) fixe un instant de synchronisation de trame à une valeur prédéterminée en fonction d'un attribut dudit signal de non-navigation.
